# EUROPEAN PATENT APPLICATION

(11) **EP 4 122 704 A1**
(43) Date of publication of application: **25.01.2023**
(21) Application number: 21188900.1
(22) Date of filing: 30.07.2021
(51) Int. Cl.: B32B 25/10, B32B 5/02, B32B 25/04, B32B 25/08, B32B 25/14, B32B 25/16, H01F 27/14

(54) **FLEXIBLE BAG, IN PARTICULAR AN AIRBAG FOR AN OIL EXPANSION TANK OF A TRANSFORMER, OIL EXPANSION TANK AND TRANSFORMER COMPRISING THE SAME AND METHOD FOR PRODUCING THE FLEXIBLE BAG**

(30) Priority: 22.07.2021 CN 202121676481 U
(71) Applicant: Hitachi Energy Switzerland AG, 5400 Baden (CH)
(72) Inventor: ZHANG, Hui, Beijing, 100101 (CN); NIU, MaoShan, Beijing, 101101 (CN); LIU, Cheng, Beijing, 100015 (CN); WANG, Yang, Beijing, 100024 (CN); BENZ, Chistophe, 1239 Collex (CH)
(74) Representative: Vossius & Partner Patentanwälte Rechtsanwälte mbB

(57) **Abstract**

The present application relates to a flexible bag for an oil expansion tank of a transformer, an oil expansion tank comprising the flexible bag and a transformer comprising the oil expansion tank comprising the flexible bag. Further, the present application relates to a method for producing the flexible bag and use of the flexible bag in an oil expansion tank of a transformer. In particular, the present application relates to an flexible bag for an oil expansion tank of a transformer, comprising a first and a second elastomer layer, and a reinforcement layer comprising a fabric, the reinforcement layer arranged between the first elastomer layer and the second elastomer layer; and the first and the second elastomer layers comprising each at least one elastomer selected from at least one of vulcanized nitrile butadiene rubber, vulcanized hydrogenated nitrile butadiene rubber or vulcanized epichlorohydrin rubber.

## Description

### Background

The present application relates to a (airtight) flexible bag, in particular an airbag, for an oil expansion tank of a transformer, an oil expansion tank comprising the flexible bag and a transformer comprising the oil expansion tank comprising the flexible bag. Further, the present application relates to a method for producing the flexible bag and use of the flexible bag in an oil expansion tank of a transformer.

Oil expansion tanks of transformers are designed to store the transformer oil which expands with increasing temperatures during operation. Typically, the oil expansion tank of transformers, in particular of traction transformers, is connected to the ambient air via a breather (air drier) containing silica gel. The silica gel removes the moisture of the air before entering the oil expansion tank and avoids degradation of the oil.

One drawback of this solution in the art is that the silica gel breather needs continuous maintenance due to silica gel replacement in the breather during operation of the transformers. Maintenance effort needs to be paid everyone to six months depending on environmental conditions and season. Sometimes, careless routine inspection will cause moisture ingress in the insulation oil system leading to safety risks.

In order to reduce maintenance costs for power transformers an aircell (also known as bladders or compensation balloons) can be applied inside the oil expansion tank to compensate for the variation in volume of the oil. As an aircell is used, it is avoided that the transformer oil comes into direct contact with the air and thus the impact of moisture and/or humidity on the transformer oil from ambient environment can be decreased. State-of-the-art transformer airbags are designed to withstand 110°C in mineral oil, which represents the standard working conditions of power transformer.

However, due to the increased need of more compact transformers and higher capacity, transformers are operating at higher temperatures and thus an airbag which is suitable for higher temperature applications is needed.

Moreover, traction transformers, e.g. for high speed trains, operate at higher working temperatures than power transformers and their working environment maybe different from power transformer. The materials used inside transformer tanks, reactors and components that will come in contact with the transformer oil must be compatible with the oil, i.e. the material must neither adversely affect the properties of the oil nor be degraded by the oil. Moreover, compared to power transformers, the working oil temperature of traction transformers is different from power transformer, generally from -40°C to 135°C, compared to -40°C to 110°C for power transformers. Further, in traction transformer systems vibrations need to be considered. Therefore, there is also a need for an airbag which is suitable for traction transformer applications.

Thus, is a need to provide a flexible bag such as an airbag and/or a flexible bag that is configured to be filled with oil that has both, good thermal ageing properties in oil at higher temperatures and good thermal ageing properties in air at higher temperatures.

Moreover, it is further need to provide flexible bag which is suitable for traction transformers, e.g. which is compatible with oil used in traction transformers.

The present application relates to a flexible bag, in particular an airbag, for an oil expansion tank of a transformer, an oil expansion tank comprising the flexible bag and a transformer comprising the oil expansion tank comprising the flexible bag. Further, the present application relates to a method for producing the flexible bag and use of the flexible bag in an oil expansion tank of a transformer.

Various exemplary embodiments of the present disclosure disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

### Description of the Drawings

FIG. 1a) shows a configuration in a traction transformer (TT) oil expansion tank according to the prior art whereas FIG. 1b) and FIG. 1c) show a configuration in a traction transformer (TT) oil expansion tank according to the present application.
FIG. 2. shows a cross section of the material of the airbag of the present application.

The present application relates to a flexible bag for an oil expansion tank of a transformer, comprising a first and a second elastomer layer, and a reinforcement layer comprising a fabric, the reinforcement layer arranged between the first elastomer layer and the second elastomer layer. The first and the second elastomer layers comprises each at least one elastomer selected from at least one of vulcanized nitrile butadiene rubber, vulcanized hydrogenated nitrile butadiene rubber or vulcanized epichlorohydrin rubber.

The present application also relates to an oil expansion tank of a transformer comprising the flexible bag according to the present application.

In addition, the present application relates to a transformer comprising the aforementioned oil expansion tank.

Moreover, the present application relates to a method for producing the flexible bag of the present application comprising providing a fabric and applying one layer of rubber on one surface of the fabric and one layer of rubber on the other surface of the fabric by vulcanizing the rubber, the rubber being selected from nitrile butadiene rubber, hydrogenated nitrile butadiene rubber or epichlorohydrin rubber.

The present application also relates to use of the flexible bag of the present application in an oil expansion tank of a transformer, the oil service temperature of the transformer being between -40°C and 170°C.

It was found that a flexible bag according to the present application has good thermal ageing properties in oil and air at higher temperatures, as well as good compatibility with oil suitable for higher temperatures. Thus, the flexible bag according to the present application can be used in higher temperature applications and also be used in combination with oil suitable for higher temperatures, in particular the flexible bag can be used in combination with ester based oil which is commonly used in traction transformers having higher working temperatures.

Moreover, the elastomers used in the elastomer layers have good mechanical properties and flexibility which lead to good vibration resistance properties for traction transformer application.

By using the flexible bag according to the present application, the dielectric oils do not come into contact with the air inside the oil expansion tank and no breather needs to be employed. Thus, the maintenance of the components will be significantly reduced. Regarding the reliability verification of the airbag material, the new airbag is supposed to be effective during the entire life of traction transformers.

Moreover, dielectric oils had been proven sensitive to moisture. By using the flexible bag, the oil expansion tank system will be isolated from the ambient air. The flexible bag can compensate the volume changes in the oil expansion tank which was caused by temperature changes and at the same time insulate the transformer oil from humidity. Meanwhile, ester based oil, which is used in traction transformers, is sensitive to oxidation reaction caused by oxygen. Since traditional breather-silica gel systems can only remove moisture from the ambient air but let the oxygen come into the oil expansion tank, the newly developed flexible bag can provide the additional benefit of an increased oxidation stability of ester based oil in traction transformers. Without the influence of moisture and oxygen, the whole system is more reliable.

The flexible bag according to the present application may be an airbag. In other words, the flexible bag according to the present application is airtight. The flexible bag/airbag comprises a first and a second elastomer layer, and a reinforcement layer comprising a fabric, the reinforcement layer arranged between the first elastomer layer and the second elastomer layer. In other words, the reinforcement layer is on the first elastomer layer and the second elastomer layer is on the reinforcement layer. Thus, the first and the second elastomer layers and the reinforcement layer form a sandwich structure.

The first and the second elastomer layers comprise each at least one elastomer selected from at least one of vulcanized nitrile butadiene rubber, vulcanized hydrogenated nitrile butadiene rubber or vulcanized epichlorohydrin rubber, in particular at least one of vulcanized hydrogenated nitrile butadiene rubber or vulcanized epichlorohydrin rubber, more particularly vulcanized hydrogenated nitrile butadiene rubber.

In particular, the first and the second elastomer layers may comprise or consist each of the at least one elastomer selected from at least one of vulcanized nitrile butadiene rubber, vulcanized hydrogenated nitrile butadiene rubber or vulcanized epichlorohydrin rubber, more particularly at least one of vulcanized hydrogenated nitrile butadiene rubber or vulcanized epichlorohydrin rubber, most particularly vulcanized hydrogenated nitrile butadiene rubber.

In this context, elastomer means a polymer which is viscoelastic.

In particular, the at least one elastomer in the first and the second elastomer layers may be the same or different.

The skilled reader understands from the present application that the shape of the airbag/flexible bag is not particularly limited. The flexible bag of the present application may be a bag of any volumetric shape. Moreover, several flexible bags may be linked together.

When the flexible bag according to the present application may be used in the oil expansion tank of the transformer the first elastomer layer may come into contact with air and the second elastomer layer may come into contact with the oil, or the other way round.

The skilled reader understands from the present application that when the flexible bag may be used in the oil expansion tank of the transformer, the flexible bag may contain the air or the oil.

In the present application, nitrile butadiene rubber (NBR) is a rubber derived from acrylonitrile and butadiene. The nitrile butadiene rubber of the present application can be produced according to any known production method.

Hydrogenated nitrile butadiene rubber (HNBR) may be produced by hydrogenation of nitrile butadiene rubber, in particular by saturating the double bonds in the butadiene segments. It is also called HSN (highly saturated nitrile). The hydrogenated nitrile butadiene rubber can be produced according to any known production method.

The epichlorohydrin rubber may be an epichlorohydrin/ethylene oxide copolymer (ECO).

The nitrile butadiene rubber, hydrogenated nitrile butadiene rubber and epichlorohydrin rubber may be vulcanized as described further below.

The reinforcement layer comprises a fabric.

In particular the fabric may comprise at least one of polyamide threads, cotton, polyester, glass, knits, silk or aramide fibers, more particularly comprises polyamide threads.

In particular the polyamide threads may be polyamide 6.6 threads.

In particular the aramide fibers may be para-aramide fibers.

More particularly, the reinforcement layer may be a composite of at least two selected from polyamide threads, cotton, polyester, glass, knits, silk or aramide fibers.

In particular the airbag may comprise further a barrier layer.

More particularly, the barrier layer may be externally arranged.

Externally arranged means that the barrier layer may be externally arranged either on the side of the first elastomer layer or on the side of the second elastomer layer.

More particularly, the airbag may comprise two barrier layers,
wherein the reinforcement layer is arranged between the first elastomer layer and the second elastomer layer;
and the first and second elastomer layer and the reinforcement layer are arranged between the two barrier layers.

When the flexible bag according to the present application may be used in the oil expansion tank of the transformer the barrier layer can come into contact with the oil or the air or both depending on if the airbag contains one or two barrier layers.

Depending on the desired function of the barrier layer, the barrier layer can comprise different components.

More particularly, the barrier layer may comprise a heterocyclic polymer and/or an organic polymer. If the barrier layer contains one of the aforementioned polymers the temperature resistance can be significantly improved.

More particularly, the barrier layer may comprise an organosilicon compound and/or organic fluorine compound. If the barrier layer contains one of the aforementioned the surface energy can be lowered.

More particularly, the barrier layer may comprise at least one selected from a heterocyclic polymer, an organic polymer, an organosilicon compound or organic fluorine compound.

More particularly, the flexible bag according to the present application may contain a mean to drain stagnant water or the flexible bag according to the present application may be fixed in the oil expansion tank in such a way to allow that stagnant water is removed by gravity.

In particular, the flexible bag of the present application may be configured to be operated at a temperature of 170°C or lower, more particularly at a temperature of 155°C or lower, and most particularly at a temperature of 135°C or lower.

In particular, the flexible bag of the present application may be configured to be operated at a temperature of -40°C or more, more particularly at a temperature of 110°C or more and most particularly at a temperature of 120°C or more.

The flexible bag of the present application is in particular suitable for higher temperature, e.g. 110°C and above. The flexible bag of the present application is also in particular suitable for traction transformers.

### Oil expansion tank

The oil expansion tank of a transformer of the present application comprises the flexible bag of the present application as defined above.

In particular, the oil expansion tank may be configured to contain an oil having an operating temperature of 170°C or lower, more particularly an operating temperature of 155°C or lower, and most particularly an operating temperature of 135°C or lower.

In particular, the oil expansion tank may be configured to contain an oil having an operating temperature of -40°C or more, more particularly an operating temperature of 110°C or more, and most particularly an operating temperature of 120°C or more.

In particular, the oil expansion tank may comprise oil.

More particularly, the oil may have a temperature of -40°C or more, even more particularly of 110°C or more, most particularly of 120°C or more.

More particularly, the oil may have a temperature of 170 °C or lower, in particular of 155 °C or lower, more particularly of 135 °C or lower.

More particularly, the oil may be mineral oil, silicon oil, or natural or synthetic ester-based oil, most particularly natural or synthetic ester-based oil.

In particular, the oil expansion tank may not contain a breather. As a flexible bag is used the transformer oil is protected from humidity or moisture from the ambient air and no additional breather is needed.

The transformer according to the present application comprises the oil expansion tank comprising the airbag as described above.

In particular, the transformer may be a traction transformer.

In particular, the transformer may have an oil service temperature between -40°C and 170°C.

More particularly, the transformer may have an oil service temperature of 110°C or more and most particularly of 120°C or more.

More particularly, the transformer may have an oil service temperature of 155°C or lower, and most particularly 135°C or lower.

The method for producing the flexible bag according to present application comprises providing a fabric and
applying one layer of rubber on one surface of the fabric and one layer of rubber on the other surface of the fabric by vulcanizing the rubber, the rubber being selected from nitrile butadiene rubber, hydrogenated nitrile butadiene rubber or epichlorohydrin rubber.

In particular, the vulcanization may be hot vulcanization in a vacuum autoclave.

The vulcanization of nitrile butadiene rubber, hydrogenated nitrile butadiene rubber and epichlorohydrin rubber can be carried out according to known vulcanization methods.

The flexible bag according to the present application is used in an oil expansion tank of a transformer, the oil service temperature of the transformer being between -40°C and 170°C.

More particularly, the oil service temperature of the transformer may be 110°C or more and most particularly 120°C or more.

More particularly, the oil service temperature of the transformer may be 155°C or lower, and most particularly 135°C or lower.

In particular, the flexible bag can be used in an oil expansion tank of a traction transformer.

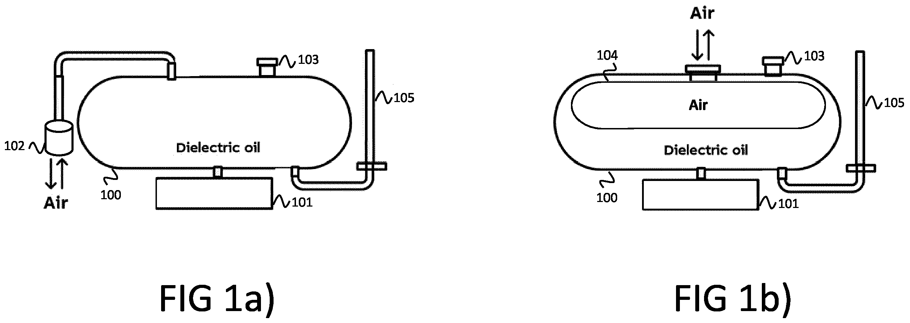

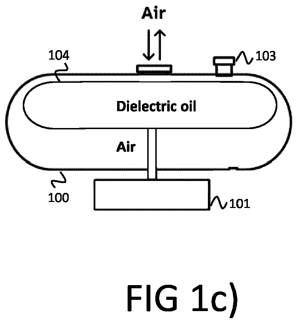

FIG. 1a) shows a configuration in a traction transformerTT oil expansion tank according to the prior art whereas FIG.1b) and FIG. 1c) show a configuration in a traction transformer TT oil expansion tank according to the present application.

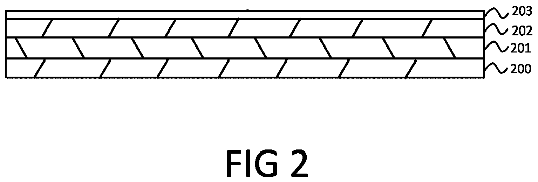

FIG. 2. shows a cross section of the material of the airbag of the present application.

FIG. 1a) shows a configuration in a traction transformer TT oil expansion tank according to the prior art. The oil expansion tank 100 contains the dielectric oil and is connected via a breather (air drier) 102 to the ambient air. The moisture of the air is removed via a breather 102 before the air enters the oil expansion tank 100. In contrast, the flexible bag, here an airbag 104, according to present application shown in FIG. 1b) can be assembled inside the oil expansion tank 100 and the traditional breather (air drier) 102 can be removed to extend the maintenance period and increase the reliability of the whole transformer. The dielectric oil will be isolated from ambient air after the airbag 104 is assembled in the oil expansion tank 100. The oil expansion tank 100 may additionally be equipped with a security valve 103 and an oil level gauge 105. The oil expansion tank 100 may be connected to the traction transformer main tank 101. FIG. 1c) shows a configuration with the oil being filled in the flexible bag 104. In such a configuration, the ambient air is in the oil expansion tank 100 and as the bag 104 is flexible, the oil can be expanded but is not in contact with the air.

FIG. 2 shows a cross section of the material of the flexible bag of the present application. The reinforcement layer (201) comprising a fabric is arranged between the first elastomer layer (200) and the second elastomer layer (202) to form a sandwich structure. A barrier layer (203) maybe formed as an external layer.

The following items provide a summary of important embodiments of the present application:
1. A flexible bag for an oil expansion tank of a transformer, comprising:
   a first and a second elastomer layer, and
   a reinforcement layer comprising a fabric,
   the reinforcement layer arranged between the first elastomer layer and the second elastomer layer; and
   the first and the second elastomer layers comprising each at least one elastomer selected from at least one of vulcanized nitrile butadiene rubber, vulcanized hydrogenated nitrile butadiene rubber or vulcanized epichlorohydrin rubber.
2. The flexible bag according to item 1,
   wherein the flexible bag is configured to be operated at a temperature of 110°Cor more.
3. The flexible bag according to item 1 or 2, wherein the flexible bag is an airbag or is configured to be filled with oil.
4. The flexible bag according to any one of items 1 to 3, wherein the flexible bag is airtight.
5. The flexible bag according to any one of items 1 to 4,
   wherein the at least one elastomer in the first and the second elastomer layers is selected from at least one of vulcanized hydrogenated nitrile butadiene rubber or vulcanized epichlorohydrin rubber, in particular is vulcanized hydrogenated nitrile butadiene rubber.
6. The flexible bag according to any one of items 1 to 5,
   wherein the fabric comprises at least one of polyamide threads, cotton, polyester, glass, knits, silk or aramide fibers.
7. The flexible bag according to item 6, wherein
   the polyamide threads are polyamide 6.6 threads.
8. The flexible bag according to item 6 or 7, wherein
   the aramide fibers are para-aramide fibers.
9. The flexible bag according to any one of items 1 to 8, wherein
   the at least one elastomer in the first and the second elastomer layers is the same or different.
10. The flexible bag according to any one of items 1 to 9,
   wherein the flexible bag comprises further an externally arranged barrier layer.
11. The flexible bag according to any one of items 1 to 10,
   wherein the barrier layer comprises at least one selected from a heterocyclic polymer, an organic polymer, an organosilicon compound or organic fluorine compound.
12. An oil expansion tank of a transformer, the oil expansion tank comprising the flexible bag according to any one of items 1 to 11.
13. The oil expansion tank according to item 12,
   wherein the oil expansion tank comprises oil.
14. The oil expansion tank according to item 13,
   wherein the oil has a temperature of -40°C or more. in particular of 110°C or more, more particularly 120°C or more.
15. The oil expansion tank according to item 13 or 14,
   wherein the oil has a temperature of 170 °C or lower, in particular of 155 °C or lower, more particularly of 135 °C or lower.
16. The oil expansion tank according to any one of items 13 to 15,
   wherein the oil is mineral oil, silicon oil, or natural or synthetic ester-based oil, in particular natural or synthetic ester-based oil.
17. The oil expansion tank according to any one of items 12 to 16,
   wherein the oil expansion tank does not contain a breather.
18. A transformer comprising the oil expansion tank according to any one of items 12 to 17.
19. The transformer according to item 18,
   wherein the transformer is a traction transformer.
20. The transformer according to item 18 or 19,
   wherein the transformer has an oil service temperature between -40 °C and 170°C, in particular between 110°C and 155°C and more particularly between 120°C and 135 °C.
21. A method for producing the flexible bag according to any one of items 1 to 11,
   the method comprising:
   providing a fabric;
   applying one layer of rubber on one surface of the fabric and one layer of rubber on the other surface of the fabric by vulcanizing the rubber,
   the rubber being selected from nitrile butadiene rubber, hydrogenated nitrile butadiene rubber or epichlorohydrin rubber.
22. The method according to item 21,
   wherein the vulcanization is hot vulcanization in a vacuum autoclave.
23. Use of the flexible bag according to any one of items 1 to 11 in an oil expansion tank of a transformer, the oil service temperature of the transformer being between -40 °C and 170°C.
24. The use according to item 23,
   wherein the transformer is a traction transformer.

### Examples

Different rubber coated fabrics applied by vulcanization have been evaluated for mechanical properties, compatibility with oil and behavior under thermal conditions. The used fabric consisted of polyamide fibers. The evaluation results are shown in Table 1.

As an ester based oil Midel 7131 was used.

As a mineral oil mineral oil #45 was used.

The pulling strength MD, pulling strength CD, tensile strength and tensile stain was measured using a mechanical testing system (MTS Shimadzu AG-X).

The compatibility with oil was measured using a glass jar and a high temperature oven.

The thermal ageing in oil and air was measured using a high temperature oven.. Both oils

(Midel 7131 and mineral #45) were measured. The mechanical strength after ageing was measured using a mechanical testing system (MTS SHIMUDZU AG-X).

NBR, HNBR and ECO were tested and ACM (alkyl acrylate copolymer) was tested as a comparative example.

**Table 1: Comparison of different rubber coated fabrics.**

| **Material type** | **Compatibility with Oil** | | **Mechanical property** | | | | **Thermal ageing in Oil** | | | | | **Thermal ageing in Air** | | |
|---|---|---|---|---|---|---|---|---|---|---|---|---|---|---|
| | **Mineral 45# (100ºC)** | **Midel 7131 (115ºC)** | **Pulling strength MD (N)** | **Pulling strength CD (N)** | **Tensile strength (MPa)** | **Tensile stain (%)** | **90ºC** | **105ºC** | **120ºC** | **130ºC** | **155ºC** | **120ºC** | **130ºC** | **155ºC** |
| **ACM** | P | P | 4053.16 | 3773.68 | 48.26 | 39.61 | G | G | G | G | G | P | P | P |
| **NBR** | NA | NA | 2974.75 | 3530.52 | 64.2 | 33.98 | G | G | G | G | G | NA | G | G |
| **HNBR** | G | G | 3012.46 | 3429.96 | 56.47 | 27.98 | G | G | G | G | G | G | G | G |
| **ECO** | G | G | 2786.16 | 3431.51 | 51.16 | 29.39 | G | G | G | P | P | G | G | P |

In the above Table, pulling strength MD means pulling strength machine direction and pulling strength CD means pulling strength cross direction.

In the above Table "P" means poor, "G" means good and "NA" means not measured.

The pulling strength MD, the pulling strength CD, the tensile strength and the tensile stain for all four materials (ACM, NBR, HNBR and ECO) were good, i.e. above 2000N in both pulling directions. Note that not only high mechanical strength but also good flexibility enables good vibration properties.

ACM material showed obvious swelling in oil and poor thermal stability in air condition. NBR and HNBR showed good results for thermal ageing in oil and air for higher temperatures. ECO showed good results forcompatibility with oil (Mineral #45 and Midel 7131). HNBR performed good in all defined tests.

Moreover, the flexibility of the different rubber coated fabrics has been tested. The results are shown in the Table below.

The flexibility was measured in accordance with BS EN ISO 7854-1997 Annex NA. The low temperature resistance was measured in accordance with ISO 4675:2017.

**Table 2: Comparison of the flexibility of different rubber coated fabrics.**

| | | ACM | NBR | HNBR | ECO |
|---|---|---|---|---|---|
| Flexibility | Cycling times | 100K | 200K | 200K | 200K |
| | Appearance | Cracking | No cracks | No cracks | No cracks |
| Low temperature resistance | Ageing temperature | -40°C | -40°C | -40°C | -40°C |
| | Period | 24h | 24h | 24h | 24h |
| | Appearance | No cracks | No cracks | No cracks | No cracks |

| | | | | | |
|---|---|---|---|---|---|
| NBR, HNBR and ECO showed good results for flexibility and low temperature resistance. High mechanical strength as well as good flexibility leads to good vibration properties. | | | | | |

While the application has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present application covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively.

Moreover, if not explicitly specified differently the given temperatures refer to temperatures at atmospheric pressure.

## Claims

1. A flexible bag for an oil expansion tank of a transformer, comprising:
a first and a second elastomer layer, and
a reinforcement layer comprising a fabric, the reinforcement layer arranged between the first elastomer layer and the second elastomer layer; and
the first and the second elastomer layers comprising each at least one elastomer selected from at least one of vulcanized nitrile butadiene rubber, vulcanized hydrogenated nitrile butadiene rubber or vulcanized epichlorohydrin rubber.

2. The flexible bag according to claim 1,
wherein the flexible bag is configured to be operated at a temperature of 110°C or more.

3. The flexible bag according to claim 1 or 2, wherein the flexible bag is an airbag or is configured to be filled with oil.

4. The flexible bag according to any one of claims 1 to 3,
wherein the at least one elastomer in the first and the second elastomer layers is selected from at least one of vulcanized hydrogenated nitrile butadiene rubber or vulcanized epichlorohydrin rubber, in particular is vulcanized hydrogenated nitrile butadiene rubber.

5. The flexible bag according to any one of claims 1 to 4,
wherein the fabric comprises at least one of polyamide threads, cotton, polyester, glass, knits, silk or aramide fibers.

6. The flexible bag according to claim 5, wherein
the polyamide threads are polyamide 6.6 threads, and/or the aramide fibers are para-aramide fibers.

7. The flexible bag according to any one of claims 1 to 6, wherein
the at least one elastomer in the first and the second elastomer layers is the same or different.

8. The flexible bag according to any one of claims 1 to 7,
wherein the flexible bag comprises further an externally arranged barrier layer.

9. The flexible bag according to any one of claims 1 to 8,
wherein the barrier layer comprises at least one selected from a heterocyclic polymer, an organic polymer, an organosilicon compound or organic fluorine compound.

10. An oil expansion tank of a transformer, the oil expansion tank comprising the flexible bag according to any one of claims 1 to 9.

11. The oil expansion tank according to claim 10,
wherein the oil expansion tank comprises oil, in particular wherein the oil has a temperature of -40°C or more, in particular of 110°C or more, more particularly 120°C or more.

12. The oil expansion tank according to claim 11,
wherein the oil has a temperature of 170 °C or lower, in particular of 155 °C or lower, more particularly of 135 °C or lower.

13. The oil expansion tank according to claim 11 or 12,
wherein the oil is mineral oil, silicon oil, or natural or synthetic ester-based oil, in particular natural or synthetic ester-based oil.

14. The oil expansion tank according to any one of claims 10 to 13,
wherein the oil expansion tank does not contain a breather.

15. A transformer comprising the oil expansion tank according to any one of claims 10 to 14, in particular the transformer being a traction transformer.

16. The transformer according to claim 15,
wherein the transformer has an oil service temperature between -40 °C and 170°C, in particular between 110°C and 155°C and more particularly between 120°C and 135°C.

17. A method for producing the flexible bag according to any one of claims 1 to 9,
the method comprising:
providing a fabric;
applying one layer of rubber on one surface of the fabric and one layer of rubber on the other surface of the fabric by vulcanizing the rubber,
the rubber being selected from nitrile butadiene rubber, hydrogenated nitrile butadiene rubber and epichlorohydrin rubber.

18. The method according to claim 17,
wherein the vulcanization is hot vulcanization in a vacuum autoclave.

19. Use of the flexible bag according to any one of claims 1 to 9 in an oil expansion tank of a transformer, the oil service temperature of the transformer being between -40°Cand 170°C, in particular the transformer being a traction transformer.
